**Europäisches Patentamt**

**European Patent Office**

**Office européen des brevets**

(19)

(11) Publication number : **0 469 479 B1**

# (12) EUROPEAN PATENT SPECIFICATION

(45) Date of publication of patent specification :
29.09.93 Bulletin 93/39

(51) Int. Cl.⁵ : **H02K 49/04**

(21) Application number : **91112592.0**

(22) Date of filing : **26.07.91**

(54) **Eddy current type retardation device.**

(30) Priority : **30.07.90 JP 201819/90**

(43) Date of publication of application :
**05.02.92 Bulletin 92/06**

(45) Publication of the grant of the patent :
**29.09.93 Bulletin 93/39**

(84) Designated Contracting States :
**DE FR GB**

(56) References cited :
**GB-A- 1 199 667
PATENT ABSTRACTS OF JAPAN vol. 014, no.
414 (E-0975) 07 September 1990, & JP-A-02
159961 (SUMITOMO METAL IND.LTD.) 02 June
1990,**

(56) References cited :
**PATENT ABSTRACTS OF JAPAN vol. 014, no.
095 (E-0892) 21 February 1990, & JP-A-01
298947 (SUMITOMO METAL IND.LTD.) 01 December 1989,
PATENT ABSTRACTS OF JAPAN vol. 013, no.
564 (E-860) 14 December 1989, & JP-A-01
234044 (SUMITOMO METAL IND.LTD.) 19 September 1989,**

(73) Proprietor : **Isuzu Motors Limited
26-1 Minamioi 6-chome
Shinagawa-ku, Tokyo (JP)**

(72) Inventor : **Kuwahara, Tohru, c/o Isuzu Motors
Ltd.
Kawasaki Works, 25-1 Tonomachi 3-chome
Kawasaki-shi, Kanagawa-ken (JP)**

(74) Representative : **Goddar, Heinz J., Dr. et al
FORRESTER & BOEHMERT
Franz-Joseph-Strasse 38
D-80801 München (DE)**

EP 0 469 479 B1

## Description

The present invention principally relates to an eddy current type retardation device for assisting a friction brake of a large-sized vehicle, and particularly to an eddy current type retardation device which effectively avoids dragging of brake disks caused by a leakage of magnetic flux at the time of non-braking.

In an eddy current type retardation device disclosed in JP-A-01298947 a pair of magnetic control plates is rotatably arranged between a pair of brake disks connected to a rotational shaft, and a magnet supporting disk is disposed between the magnetic control plates, the magnet supporting disk fastening a number of permanent magnets so that the permanent magnets are disposed at peripherally equal intervals and polarities thereof with respect to the brake disks are alternately different. The magnetic control plates are designed so that ferromagnetic plates having area of substantially same as that of the permanent magnet are disposed at peripherally equal intervals on non-magnetic plates of aluminum or the like.

When the ferromagnetic plates hold the magnetic control plates in a position opposed to the permanent magnets at the time of braking, the magnetic flux from the permanent magnets penetrate through the ferromagnetic plates to vertically act on the brake disks, and when the brake disks cross the magnetic field, eddy current is generated in the brake disks, as a consequence of which the brake disks receive braking torque.

When the ferromagnetic plates hold the magnetic control plates in a rotated position deviated by half pitch of the arrangement of the permanent magnets at the time of non-braking, two permanent magnets peripherally adjacent to each other are partly sandwiched between the pair of ferromagnetic plates, as viewed from the outer peripheral side, to form a short-circuited magnetic closed circuit between the two permanent magnets adjacent to each other and a pair of left and right ferromagnetic plates, whereby magnetic field applied to the brake disks becomes extremely weakend, and braking torque received by the brake disks becomes extremely small.

However, the magnetic flux leaked from a peripheral center portion of the permanent magnet, not sandwiched between the ferromagnetic plates, acts on the brake disks. Therefore, there arises a problem in that the brake disks receive dragging torque. If the thickness of the magnetic control plates is increased in order to minimize leaking magnetic flux from the permanent magnets to the brake disks, the entire device increases its weight, and spacing between the permanent magnets and brake disks becomes wider, as a consequence of which the magnetic flux which penetrates the ferromagnetic plates from the permanent magnets and reaches the brake disks, at the time of braking, decreases and braking torque lowers.

Furthermore, in an eddy current type retardation device disclosed in JP-A-01234044 two permanent magnets which have different polarity against the ferromagnetic plate are sandwiched between a pair of ferromagnetic plates at the time of non-braking to form a short-circuited magnetic closed circuit. Therefore, leaking magnetic flux decreases. However, the arrangement of the ferromagnetic plates and the permanent magnets is irregular and the arranging spacing or arranging pitch is coarse and dense, thus posing a problem in that braking torque per unit area received by the brake disks at the time of braking becomes small.

In the view of the aforementioned problem, an object of the present invention is to provide an eddy current type retardation device which can effectively eliminate leaking magnetic flux without increasing the weight at the time of non-braking, and obtain a great braking torque at the time of braking.

For achieving the aforesaid object, the present invention provides an arrangement with the features of claim 1.

Subject matter of the subclaims are prefered embodiments of the invention.

In a prefered embodiment of the invention, the polarities of two permanent magnets peripherally adjacent to each other with respect to the ferromagnetic plates are reversed to each other between the ferromagnetic plates of the fixed frame at the time of non-braking. A short-circuited magnetic-closed circuit is formed between two permanent magnets peripherally adjacent to each other and the left and right ferromagnetic plates, and the brake disks are not affected by the magnetic field. Since the whole surface of two permanent magnets peripherally adjacent to each other is sandwiched between the ferromagnetic plates, the leaking magnetic flux rarely occurs.

When the magnet supporting ring is rotated by an arranging pitch of the permanent magnets at the time of braking, the polarities of the two permanent magnets adjacent to each other with respect to the ferromagnetic plates become the same at the time of braking, and the magnetic field from both the permanent magnets penetrate the ferromagnetic plates and vertically act on the brake disks. When the rotating brake disks cross the magnetic field, eddy current is generated in the brake disks, and the brake disks recieve braking torque.

This and other objects, features, aspects and advantages of the present invention will become more apparent from the following detailed description of the present invention when taken in conjunction with the accompanying drawings. In the drawings:

Fig. 1 is a front sectional view of an eddy current type retardation device according to the present invention;

Fig. 2 is a side sectional view of a magnet supporting ring according to the present invention; Fig. 3 is a developed plan sectional view, showing the relationship between ferromagnetic plates and permanent magnets at the time of non-braking; and Fig. 4 is a developed plan sectional view, showing the relationship between ferromagnetic plates and permanent magnets at the time of braking.

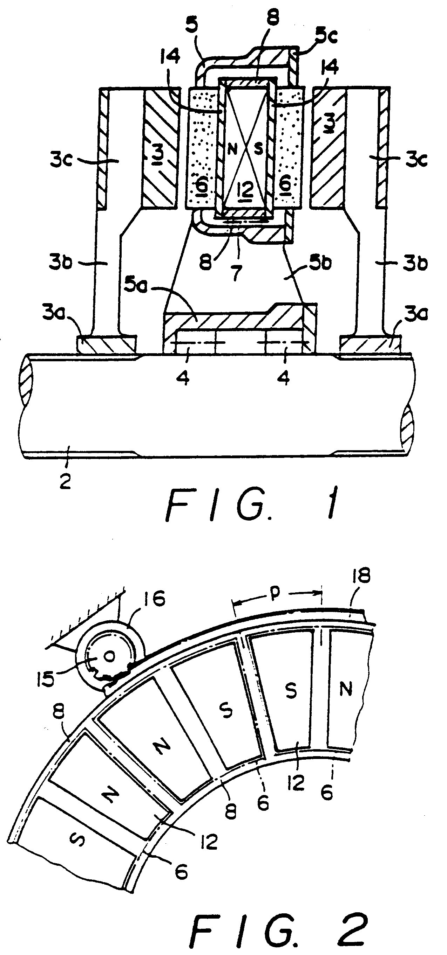

Fig. 1 is a front setional view of an eddy current type retardation device according to the present invention, and Fig. 2 is a side view of the same. The eddy current type retardation device according to the present invention comprises a pair of brake disks 3 formed of conductive material connected to an output rotational shaft 2 of a transmission or a speed change gear of a vehicle, a fixed frame 5 formed of non-magnetic material arranged between the brake disks 3, and a magnet supporting ring 8 rotatably supported in an inner space portion of the fixed frame 5. The brake disks 3 have bosses 3a secured to the rotational shaft 2 by spline. Preferably, the boss 3a, spokes 3b extending radially from the boss 3a and the brake disk 3 having vent passages 3c is integrally formed by casting.

The fixed frame 5 is of a cylindrical shape and has an inner space portion of a rectangular section, and more specifically, a cylindrical body having a C-shaped section is covered with an annular cover plate 5c. The fixed frame 5 is formed integral with spokes 5b extending radially from the boss 5a, the boss 5a being supported on the rotational shaft 2 by means of bearings 4. The fixed frame 5 is secured to the gear box wall of said transmission by suitable means. A number of ferromagnetic plates (pole pieces) 6 are connected at peripherally equal intervals to both side walls of the fixed frame 5. Preferably, the ferromagnetic plates 6 are embedded when the fixed frame 5 is molded.

A magnet supporting ring 8 is rotatably supported by means of a bearing 7 in the inner space portion of the fixed frame 5. A number of permanent magnets 12 are arranged at peripherally equal intervals on the magnet supporting ring 8. Every two permanent magnets 12 are arranged opposedly of each ferromagnetic plate 6. A pair of thin slide plates 14 immersed in a lubricating oil are sandwiched in sliding contact between both side walls of the magnet supporting ring 8 and the ferromagnetic plates 6.

As shown in Fig. 2, the magnet supporting ring 8 is formed of non-magnetic material such as aluminum, and is provided with a number of sectorial permanent magnets 12 against the ferromagnetic plates 6 having an area substantially twice of the magnet. Every two permanent magnets are opposed to the ferromagnetic plate 6 and every two polarities thereof with respect to the ferromagnetic plates 6 are peripherally different. Preferably, the permanent magnets 12 are cast into the magnet supporting ring 8. A pinion 15 of an electric motor 16 secured to the fixed frame 5 is meshed with a sectional gear 18 formed on the outer peripheral wall of the magnet supporting ring 8, and the magnet supporting ring 8 can be rotated normally and reversely by an arranging pitch p of the permanent magnets 12.

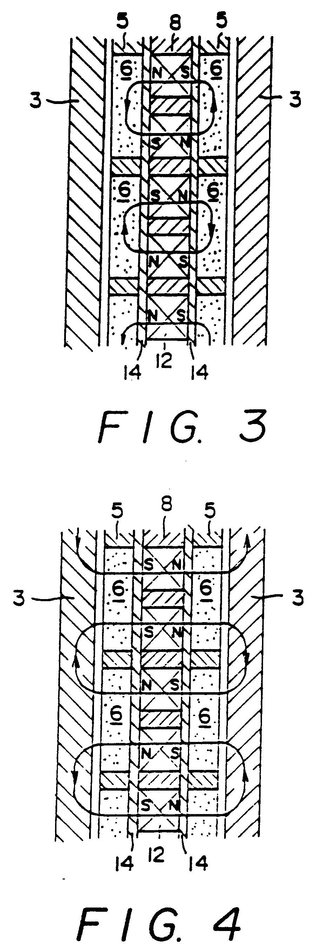

Subsequently, the operation of the eddy current type retardation device according to the present invention will be described hereinafter. The brake disks 3 are rotated together with the rotational shaft 2 whereas the polarities of two permanent magnets 12 peripherally adjacent to each other with respect to a common ferromagnetic plate 6 are different from each other at the time of non-braking, as shown in Fig. 2 and 3, a short-circuited magnetic closed circuit is generated between the opposed ferromagnetic plates 6, and the brake disks 3 are not affected by magnetic field. Since each opposed ferromagnetic plates 6 is in the state in which the side surface of two permanent magnets 12 are fully covered by the opposed ferromagnetic plates 6, leaking magnetic flux to the brake disks 3 rarely occurs. Accordingly, the brake disks 3 are not subjected to dragging torque.

When the magnet supporting ring 8 is rotated by the arranging pitch p of the permanent magnets 12 by means of the electric motor 16 at the time of braking, the polarities of two permanent magnets 12 with respect to the common ferromagnetic plates 6 are the same. Accordingly, two permanent magnets 12 apply magnetic field to the brake disks 3 via the ferromagnetic plates 6, as shown in Fig. 4. When the rotating brake disks 3 cross the magnetic field, eddy current occurs in the brake disks 3, and the brake disks 3 receive braking torque. At that time, a magnetic closed circuit is formed from the permanent magnet 12, the ferromagnetic plate 6, the brake disk 3, the adjacent ferromagnetic plate 6, the adjacent permanent magnet 12, the ferromagnetic plate 6 on the opposite side, the brake disk 3 on the oppsite side, to the adjacent ferromagnetic plate 6.

The ferromagnetic plates 6 on both side walls of the fixed frame 5 form, by rotating the magnet supporting ring 8 by an arranging pitch, a non-braking state in which short-circuited magnetic closed circuits are formed between ferromagnetic plates 6 on the opposite side walls of the fixed frame 5, and a braking state in which magnetic closed circuits are formed through the ferromagnetic plate of the side walls of the fixed frame 5 to the brake disks 3 so as to apply magnetic field.

While in the above-described embodiment, the magnet supporting ring is normally and reversely rotated by an arranging pitch of the permanent magnets by means of the electric motor, it is to be noted that the magnet supporting ring may be rotated by means of a fluid pressure actuator and that the magnet supporting ring may be fixed and the fixed frame may be rotated, instead of above embodiment.

As mentioned above, the present invention provides an arrangement wherein, a cylindrical fixed frame formed of non-magnetic material and having an inner space portion of a rectangular section is arranged between a pair of brake disks connected to a rotational shaft, a number of ferromagnetic plates are connected at peripherally equal intervals to both side walls of the fixed frame, and a number of permanent magnets are arranged on a magnet supporting ring rotatably supported in the inner space portion of the fixed frame so that every two magnets are opposed to each ferromagnetic plate and every two polarities of two magnets against the ferromagnetic plate are alternately different. Since the whole surface of two permanent magnets adjacent to each other on the magnet supporting ring are always sandwiched between a pair of ferromagnetic plates, when the polarities of the permanent magnets adjacent to each other with respect to the ferromagnetic plates are reversed to each other at the time of non-braking, short-circuited magnetic closed circuits are generated between each pair of ferromagnetic plates. Accordingly, the fixed frame has substantially the same dimension as that of prior art, that is, an increase of weight is not brought forth. Therefore, leakage of magnetic flux is eliminated, and dragging torque of the brake disks at the time of non-braking can be overcome.

Since a number of permanent magnets are regularly arranged without coarse and dense on the magnet supporting plate, a great braking torque as compared with prior art is applied to the brake disks at the time of braking.

p: arranging pitch

1:

2: rotational shaft

3: brake disk         3a: boss   3b: spoke   3c: vent passage

4: bearing

5: fixed frame       5a: boss   5b: spoke   5c: cover plate

6: ferromagnetic plate

7: bearing

8: magnet supporting ring

9: ,,

10:

11:

12: permanent magnet

13:

14: slide plate

15: pinion

16: electric motor

17:

18: sectional gear

19:

## Claims

1. An eddy current type retardation device comprising a cylindrical frame (5) formed of non-magnetic material and having an inner space portion of a rectangular section arranged between a pair of brake discs (3) connected to a rotational shaft (2), a number of ferromagnetic plates (6) connected at peripherally equal intervals to both side walls of the frame (5) and a number of permanent magnets (12) arranged on a magnet supporting ring (8) supported in the inner space portion of the frame (5), wherein one of the frame (5) and the ring (8) is fixed and the other one is rotatable, characterized in that each ferromagnetic plate (6) has two magnets (12) opposed to it and that each magnet (12) has the one adjacent magnet (12) of the same polarity and the other adjacent magnet (12) of the opposite polarity.

2. The device as claimed in claim 1, characterized in that said frame (5) is fixed and that said magnet supporting ring (8) is rotatable.

3. The device as claimed in claim 1 or 2, characterized in that said magnet supporting ring (8) is formed of non-magnetic material.

4. The device as claimed in claim 3, characterized in that said non-magnetic material is aluminium.

5. The device as claimed in one of the claims 1 to 4, characterized in that said permanent magnets (12) are cast into the magnet supporting ring (8).

6. The device as claimed in one of the claims 2 to 5, characterized in that said ferromagnetic plates (6) are embedded to the side walls of the fixed frame (5) when said fixed frame (5) is molded.

7. The device as claimed in one of the foregoing claims, characterized in that a pair of thin slide plates (14) are sandwiched in sliding contact between both side walls of the magnet supporting ring (8) and the ferromagnetic plates (6).

8. The device as claimed in one of the claims 2 to 7, characterized in that the magnet supporting ring (8) is normally and reversely rotated by an arranging pitch (p) of the permanent magnets (12) by means of an electric motor (16).

9. The device as claimed in one of the claims 2 to 7, characterized in that said magnet supporting ring (8) is rotated by means of a fluid pressure actuator.

10. The device as claimed in claim 1, characterized in that said magnet supporting ring (8) is fixed and said frame (5) is rotatable.


**Patentansprüche**

1. Wirbelstrombremse, umfassend einen zylindrischen Rahmen (5) aus unmagnetischen Material mit einem inneren Zwischenraum rechteckigen Querschnitts, der zwischen einem Paar Bremsscheiben (3) angeordnet ist, welche mit einer rotierenden Welle (2) verbunden sind, eine Anzahl ferromagnetischer Platten (6), die mit gleichen Umfangsintervallen an beiden Seitenwänden des Rahmens (5) befestigt sind und eine Anzahl von Permanentmagneten (12), die auf einem Magnettragering (8) angeordnet sind, welcher im inneren Zwischenraum des Rahmens (5) gehalten ist, wobei der Rahmen (5) ortsfest und der Ring (8) drehbar ist oder umgekehrt, dadurch gekennzeichnet, daß jeder ferromagnetischen Platte (6) zwei Magneten (12) gegenüberliegen und daß jeder Magnet (12) neben einem Magneten (12) gleicher Polarität und neben einem Magneten (12) entgegengesetzter Polarität liegt.

2. Wirbelstrombremse nach Anspruch 1, dadurch gekennzeichnet, daß der besagte Rahmen (5) ortsfest und der besagte Magnettragering (8) drehbar ist.

3. Wirbelstrombremse nach Anspruch 1 oder 2, dadurch gekennzeichnet, daß der besagte Magnettragering (8) aus unmagnetischem Material ist.

4. Wirbelstrombremse nach Anspruch 3, dadurch gekennzeichnet, daß das besagte unmagnetische Material Aluminium ist.

5. Wirbelstrombremse nach einem der Ansprüche 1 bis 4, dadurch gekennzeichnet, daß die besagten Permanentmagneten (12) in den Magnettragering (8) eingegossen sind.

6. Wirbelstrombremse nach einem der Ansprüche 2 bis 5, dadurch gekennzeichnet, daß die besagten ferromagnetischen Platten (6) in die Seitenwände des ortsfesten Rahmens (5) eingelassen werden, wenn der besagte ortsfeste Rahmen (5) gegossen wird.

7. Wirbelstrombremse nach einem der vorangehenden Ansprüche, dadurch gekennzeichnet, daß ein Paar dünner Schiebeplatten (14) in verschieblicher Berührung zwischen den beiden Seitenwänden des Magnettragerings (8) und der ferromagnetischen Platte (6) liegen.

8. Wirbelstrombremse nach einem der Ansprüche 2 bis 7, dadurch gekennzeichnet, daß der Magnettragering (8) um den Anordnungswinkel (p) der Permanentmagneten (12) mittels eines Elektromotors (16) hin- und herdrehbar ist.

9. Wirbelstrombremse nach einem der Ansprüche 2 bis 7, dadurch gekennzeichnet, daß der besagte Magnettragering (8) mittels einer Fluiddruckbetätigung verdreht wird.

10. Wirbelstrombremse nach Anspruch 1, dadurch gekennzeichnet, daß der besagte Magnettragering (8) ortsfest und der besagte Rahmen (5) drehbar ist.


## Revendications

1. Dispositif de ralentissement de type à courants de Foucault comprenant un cadre cylindrique (5) réalisé en matériau non-magnétique et présentant une partie d'espace intérieur à section rectangulaire disposée entre un couple de disques de frein (3) reliés à un arbre rotatif, (2), un certain nombre de plaques ferromagnétiques (6) reliées, à des intervalles périphériques égaux, aux deux parois latérales du cadre (5) et un certain nombre d'aimants permanents (12) disposés sur une bague de support d'aimant (8) supportée dans la partie d'espace intérieur du cadre (5), dans lequel un élément parmi le cadre (5) et la bague (8) est fixé et l'autre élément est rotatif, caractérisé en ce que chaque plaque ferromagnétique (6) a deux aimants (12) face à elle et que chaque aimant (12) a l'un des aimants (12) adjacents doté de la même polarité et l'autre aimant (12) adjacent doté de la polarité opposée.

2. Dispositif selon la revendication 1, caractérisé en ce que ledit cadre (5) est fixé et que ladite bague de support d'aimant (8) est rotative.

3. Dispositif selon la revendication 1 ou 2, caractérisé en ce que ladite bague de support d'aimant (8) est réalisée en matériau non-magnétique.

4. Dispositif selon la revendication 3, caractérisé en ce que ledit matériau non-magnétique est de l'aluminium.

5. Dispositif selon l'une quelconque des revendications 1 à 4, caractérisé en ce que lesdits aimants permanents (12) sont moulés dans la bague de support d'aimant (8).

6. Dispositif selon l'une quelconque des revendications 2 à 5, caractérisé en ce que lesdites plaques ferromagnétiques (6) sont noyées dans les parois latérales du cadre fixe (5) lorsque ledit cadre fixe (5) est moulé.

7. Dispositif selon l'une quelconque des revendications précédentes, caractérisé en ce qu'un couple de minces plaques coulissantes (14) sont prises en sandwich en contact coulissant entre les deux parois latérales de la bague de support d'aimant (8) et les plaques ferromagnétiques (6).

8. Dispositif selon l'une quelconque des revendications 2 à 7, caractérisé en ce que la bague de support d'aimant (8) est tournée dans le sens normal et inverse d'un pas de disposition (p) des aimants permanents (12), au moyen d'un moteur électrique (16).

9. Dispositif selon l'une quelconque des revendications 2 à 7, caractérisé en ce que ladite bague de support d'aimant (8) est tournée au moyen d'un organe d'actionnement à pression hydraulique.

10. Dispositif selon la revendication i, caractérisé en ce que ladite bague de support d'aimant (8) est fixée et ledit cadre (5) est rotatif.

FIG. 1

FIG. 2

F I G. 3

F I G. 4